# EUROPEAN PATENT APPLICATION

(11) **EP 2 682 328 A1**
(43) Date of publication of application: **08.01.2014**
(21) Application number: 13174974.9
(22) Date of filing: 03.07.2013
(51) Int. Cl.: B62D 7/08, B60G 3/20

(54) **Wheel suspension for a steerable wheel of a vehicle**

(30) Priority: 03.07.2012 NL 2009111
(71) Applicant: Stichting Hogeschool Rotterdam, 3015 CX Rotterdam (NL)
(72) Inventor: De Lange, Hendrik Paul, 4141 EE Leerdam (NL)
(74) Representative: Jilderda, Anne Ayolt

(57) **Abstract**

A wheel suspension for a steering wheel (10) comprises a wheel holder (30..33) with which the wheel is rotatably connected. The wheel holder is coupled to the vehicle frame (20) in a swivelable manner through the interposition of the wheel suspension. The wheel suspension comprises a set of rail bodies (41, 42) and a set of swivel bodies (43, 44) which are rotatably connected in relation to each other and to the wheel holder (30). The rail bodies (41, 42) engage with the wheel holder (30..33) in particular on both sides of the wheel outside a wheel space. Thus the wheel suspension brings about a steering of the wheel (10) around a supporting point (S), while space is available within the wheel for placement of say a wheel motor (80).

## Description

The present invention relates to a wheel suspension of a steerable wheel, the wheel suspension comprising a wheel holder with which a wheel, at least during operation, is rotatably connected around a rotation axis, the wheel holder being connectable to the vehicle frame in a swiveling manner, at least one track body being coupled to the wheel holder, capable of and adapted to impose a deflection around a swivel axis to the wheel holder, when energized.

Such a wheel suspension is, for example, known from American patent USP 4.799.703 and is used on a large scale in a steering assembly for motor vehicles, such as for example cars, vans, buses and lorries. In this known wheel suspension the wheel is usually assembled on a wheel carrier, which extends from the wheel holder through the interposition of a suitable bearing. The wheel holder, in turn, is connected to the vehicle frame in a swiveling manner to allow the wheel to adopt another position for cornering. This swivelable connection between the wheel holder and the vehicle frame arises in the known wheel suspension as a result of a connector, often in the form of a so-called spindle piece with a ball joint which accordingly is heavily sized to be able to resist a drive load.

A drawback to these known or comparable spindle connections is that in the known wheel suspension this construction part is located at the continuation of a centre line through the wheel and takes up a relatively large amount of space there.

The present invention aims, amongst other things, to provide for a wheel suspension which leaves space free within a wheel space of the wheel holder, so that this space is available, for example, for the driving of the wheel.

In order to accomplish the intended goal a wheel suspension of the type described in the opening paragraph according to the invention is characterized in that the at least one track body comprises a first track body and a second track body, which are, through the interposition of first hinge means, each rotatably connected to respectively a first swivel body, a second swivel body and the wheel holder, that the first swivel body and the second swivel body are rotatably connectable to the vehicle frame through the interposition of respective further hinge means, that the first hinge means and the further hinge means are at least substantially in a first direction, at least in projection, at least substantially in alignment with one another, that the hinge means of or with each of both swivel bodies and of or with the wheel holder are at least substantially in a second direction, at least in projection, at least substantially in alignment with one another, that a supporting point of the wheel and the further hinge means are at least substantially in the first direction, at least in projection, at least substantially in alignment with one another and that the supporting point of the wheel and the hinge means of or with the wheel holder are at least substantially in the second direction, at least in projection, at least substantially in alignment with one another.

This wheel suspension allows actuation of the swivel bodies with the track bodies articulated thereto. This actuation is imposed, via the track bodies, on the wheel holder, to which the wheel is fixed, which turns, as it were, around a virtual king pin axis. The wheel suspension according to the invention thereby allows the track bodies to engage with the wheel holder outside a wheel space, so that space remains available inside the wheel for say a driving of the wheel.

In order to ensure that the wheel suspension can in a vertical direction adequately accommodate differences in height and unevenness in a road surface, a particular preferred embodiment of the wheel suspension according to the invention is characterized in that the first hinge means comprise ball hinge means. Ball hinge means allow a free rotation in space around three imaginary mutually orthogonal rotation axes. The first hinge means connect the track bodies to the swivel bodies and thus provide freedom of movement in all directions. This freedom of movement is particularly provided outside a plane spanned by the swivel bodies and track bodies, such that the whole, perpendicular to that plane, retains a degree of freedom.

A further particular embodiment of the wheel suspension according to the invention is characterized in that the second hinge means comprise line hinge means. Such line hinge means allow a rotation of the first swivel body in a flat plane around an imaginary hinge axis, which is translated into a corresponding swiveling of the wheel around the first swivel axis. Apart from this swiveling the line hinges provide, save for a certain clearance, a rigid connection which leads to stability of the whole.

A preferred embodiment of the wheel suspension according to the invention is characterized in that the first hinge means comprise ball hinge means with the first swivel body, that the further hinge means of the first swivel body comprise a line hinge with a substantially vertical swivel axis, and that the second swivel body is connected to the vehicle frame by guide means which impose on the further hinge means of the second swivel body a trajectory at least almost in accordance with a circular arc. The vertically orientated line hinge of the first swivel body only allows the first swivel body to swivel in a substantially horizontal plane.

The trajectory into which the further hinge means of the second swivel body are thus forced is located in a plane that at least by approximation is perpendicular to the driving direction. A centre of the circular arc at least by approximation coincides with the further hinge means of the first swivel body. By thus providing the second swivel body with a freedom of movement in the said plane, the wheel holder is provided with a corresponding freedom of movement in at least almost the same vertical plane, without incidentally imposing further restrictions on the previously mentioned possibility of actuating the swivel bodies and the wheel holder to full steering angle.

In a further preferred embodiment the wheel suspension according to the invention is characterized in that the guide means comprise a stabilization body, which is connected to the second swivel body through the interposition of first ball hinge means and is connectable to the vehicle frame through the interposition of second ball hinge means, the first and second ball hinge means, viewed in a driving direction, and at least in projection, being in alignment with each other. Thus it is accomplished that the first ball hinge means can trace at least almost a circular movement around the connecting line between the further hinge means of the first swivel body and the second hinge means of the stabilization body, the circular movement at least almost coinciding with a vertical, linear movement during small wheel deflections. The stabilization body is further tasked with transferring brake- and drive forces from the wheels via the wheel holders, the track bodies and the second swivel body to the vehicle frame, and vice versa.

A preferred embodiment of the wheel suspension according to the invention is characterized in that the wheel holder comprises a first wheel holder part on a first side of a wheel space, as well as a second wheel holder part on a second, viewed in a driving direction, facing side of the wheel space, and that the first and the second track body are rotatably connected on both sides of the wheel space through the interposition of ball hinge means to respectively the first wheel holder part and the second wheel holder part of the wheel holder. The wheel suspension thus leaves a wheel space completely free at the location of the wheel, so that, for example, a driving of the wheel or vehicle components otherwise connected to the wheel can be advantageously provided for, such as for instance a braking device.

A further particular embodiment of the wheel suspension according to the invention is characterized in that the wheel holder comprises a central part with which the wheel is rotatably connectable around a rotation axis, that the first wheel holder piece and the second wheel holder piece each comprise an angulated wheel holder arm which on the one hand extends radially from the central part of the wheel holder and on the other hand reaches around the wheel space with a distal end, where a track body is connected to it.

In a further preferred embodiment the wheel suspension according to the invention is characterized in that the wheel holder comprises a third wheel holder part between the first wheel holder part and the second wheel holder part, which extends above the wheel space and is connectable to the vehicle frame through the interposition of ball hinge means and guide means, the ball hinge means being located at least almost in a vertical plane through the supporting point of the wheel, and that the guide means impose upon the wheel holder at least substantially a linear trajectory.

The third wheel holder part, which is connectable to the vehicle frame through the interposition of a ball hinge, is forced by the guide means into an at least by approximation straight, substantially vertical line which goes through the supporting point of the wheel with the road. Thus it is achieved that the wheel retains its at least by approximation vertical position during compressing. Said guide means may advantageously comprise a so-called Mc Pherson wheel strut. This consists of a mainly vertically placed guiding which is connected to the vehicle frame via ball hinge means.

In an alternative embodiment the guide means comprise as an alternative that the guide means of the wheel holder can be carried out as an at least by approximation horizontally placed stabilization body which is connected to the third wheel holder piece through interposition of a ball hinge means and is connected to the vehicle frame through the interposition of a line hinge, of which a hinge line is located at least by approximation in the driving direction.

In a further preferred embodiment of the wheel suspension according to the invention the weight of the frame and the other vehicle parts are transferred to the wheel carrier and the wheel via spring and damping means. Such an embodiment according to the invention is characterized in that the wheel holder is connectable in an axially movable manner to the vehicle frame through the interposition of spring means. Such spring means comprise, for example, a helical spring with a shock absorber or air suspension and provide for a significant increase in riding comfort, which is particularly advantageous for passenger transport, besides a relieving of the whole construction if the wheel is subjected to vertically directed forces.

Thanks to the "floating" suspension of the wheel, which is achieved thanks to the invention, valuable space for other parts of or for the vehicle remains available on an inside. A special embodiment of the wheel suspension according to the invention in this context is characterized in that the wheel holder comprises a wheel motor, which at least during operation drives the wheel, whereby the wheel is directly driven by a satellite motor. Not only does this avoid the construction of a driving line from a central motor of the vehicle, it also thus keeps driving loss to a minimum.

In a further special embodiment the wheel suspension according to the invention is characterized in that the wheel motor comprises an electric motor. Due to the enormous torque at low speeds an electric motor is eminently suited to drive a wheel of a vehicle. Moreover, the feeding of an electric motor can be realized elegantly by means of an electric cable connection from a battery (pack) or generator elsewhere on board the vehicle. In a further special embodiment such a compact electric motor is used that the wheel motor is at least partly located in the wheel.

Although the wheel holder in the context of the invention can be realized in different ways, a further special preferred embodiment of the wheel suspension according to the invention is characterized in that the wheel holder comprises a central part with which the wheel is rotatably connectable around a rotation axis, as well as a set of angulated wheel holder arms which extend radially from the central part of the wheel holder and reach around a wheel space with a distal end, the track bodies each being connected to a distal end of a wheel holder arm. The track bodies thus engage with the wheel holder outside the wheel space, so that at the level of the central part thereof no space is occupied by the wheel suspension. This space can thus advantageously be used for the placement of, for example, the previously described satellite motor.

In a vehicle with a number of steered wheels the wheel suspension according to the invention can be used in corresponding multiples. A further special embodiment of the wheel suspension according to the invention comprises for this purpose a second corresponding wheel holder which is connectable to the vehicle frame in a swivelable manner on a facing side of the vehicle frame. A further special preferred embodiment of the wheel suspension according to the invention is characterized in that both wheel holders are coupled to a common swivel body. Thus an extra swivel body is avoided and it is ensured that both wheels have a deflection imposed upon them synchronously.

An alternative embodiment of the wheel suspension according to the invention is, however, characterized in that both wheel holders are each connected to an own swivel body and that the swivel bodies of both wheel holders are coupled to each other by means of a coupling body, the coupling body being rotatably connected to each of the swivel bodies outside the line of the first hinge means of or to the swivel body. The coupling between both swivel bodies outside a line of the hinge connections with the swivel bodies provides for a coordinated uneven deflection of both wheels, which will benefit the curve behavior of the vehicle. An outer wheel can thus have a greater turning circle imposed upon it than an inner wheel, taking into account the mutual distance between the wheels, so that the vehicle will not "wrench" as much in a turn.

A further special embodiment of the wheel suspension in this respect is characterized in that the swivel bodies extend with a steered wheel from a wheel axle of the vehicle and that the vehicle comprises a further wheel axle, from which a set of non-steered wheels extends and that respective rotation axes of the steered wheels, when inclined, intersect each other at least almost in the prolongation of the further wheel axle of the vehicle. Accordingly the wheel suspension is conducive to satisfying the so-called Ackermann-principle, which demonstrates on theoretical grounds that wrenching in a turn is kept to a minimum.

A further special embodiment of the wheel suspension according to the invention in this context is characterized in that the swivel bodies extend with a steered wheel from a wheel axle of the vehicle and that the vehicle comprises a further wheel axle from which a corresponding further set of steered wheels extends and that respective rotation axes of the steered wheels, when inclined, intersect each other at least almost on an imaginary axis halfway between both wheel axes of the vehicle. Also in the case of a thus simultaneously steered further wheel axle a wrenching in the turns can in this way be limited and moreover the turning circle is reduced.

The invention will now be explained further based on a few examples of embodiments and an accompanying drawing. The drawing shows in:
- figure 1: a perspective view of a first example of an embodiment of a wheel suspension according to the invention;
- figure 2: the wheel suspension of figure 1 in a top view;
- figure 3: a perspective view of a second example of an embodiment of a wheel suspension according to the invention; and
- figure 4: a top view of the wheel suspension of figure 3; and
- figure 5: a schematic rendering of the Ackermann-principle, as used in the wheel suspension of figure 3.

The figures are incidentally purely schematic and not drawn to scale. In particular some of the dimensions may be exaggerated to a greater or lesser extent in their rendering for the sake of clarity. Corresponding parts in the figures are indicated with the same reference numerals as much as possible.

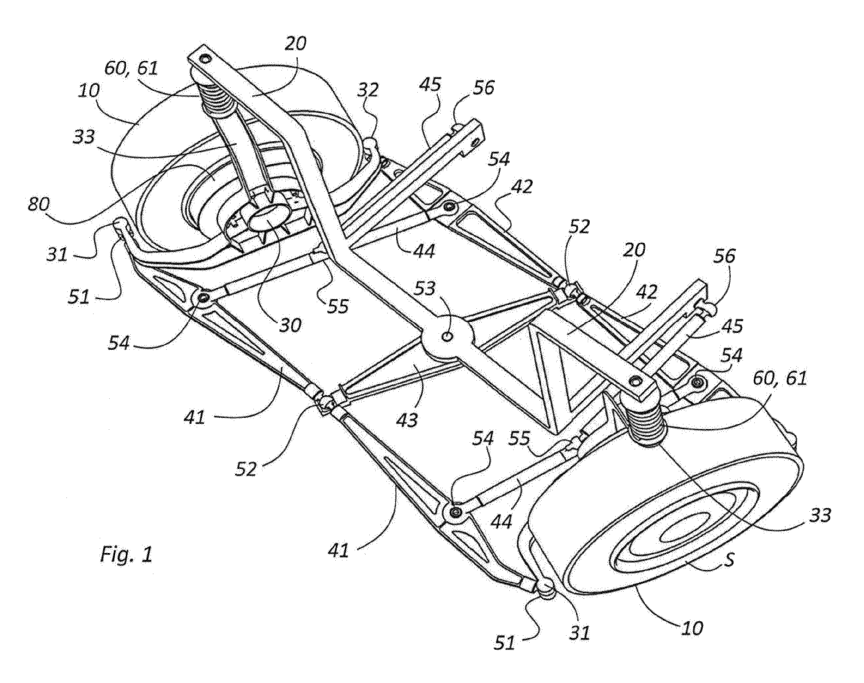

Figure 1 shows an example of an embodiment of a wheel suspension according to the invention. Here the wheel suspension is used doubly for both shown, steered wheels 10 of a vehicle of which a part 20 of a vehicle frame is represented in the figure. This example concerns a part of an electric bus, but the wheel suspension can also be used on other vehicles, either electrically driven or not. The wheels 10 are each rotatably assembled around a rotation axis on a wheel holder 30 which is connected to the vehicle frame 20 in a swivelable manner around an imaginary swivel axes through the interposition of the wheel suspension. The wheel holder 30 comprises a central part 35 from which a set of angulated arms 31, 32, 33 extends radially. The wheel holder arms 31, 32, 33 each reach with an end around the wheel which is free to rotate in a wheel space falling therein.

The wheel suspension comprises on either side of the wheel axle shown in the figure a first track body 41 and a second track body 42, which through the interposition of hinge means in the form of ball hinges 51, 52 is rotatably connected on one hand to an end of one of the wheel holder arms 31, 32 and on the other hand are coupled to a first swivel body 43. The swivel body 43, in turn, is articulated to the vehicle frame 20 through the interposition of further hinge means in the form of a line hinge 53. The first swivel body 43 in this example of an embodiment is shared by the wheel suspensions of both wheels, so that a deflection thereof will be evenly transferred to both wheels.

The wheel suspension further comprises a second swivel body 44 which extends between both track bodies 41, 42 and through the interposition of hinge means in the form of further line hinges 54 are rotatably connected to them. The further swivel bodies 44 are each coupled to the vehicle frame through the interposition of a stabilization body 45. The stabilization body 45 is on the one hand connected at a point of rotation to the swivel body 44 through the interposition of further hinge means in the form of ball hinges 55, 56, so that that will thus be rotatable there, and on the other hand coupled rotatably to a part of the vehicle frame 20. The stabilization body deprives the whole of a degree of freedom of movement around a rotation axis of the wheel, which particularly benefits a (torsion) stability when accelerating or slowing down.

The individual hinge means 51..55 are positioned and the different parts of the suspension sized in such a manner that the hinge means 51, 52, 54 of or with both track bodies 41, 42 mutually are at least almost in alignment in substantially a first direction.

Moreover, the hinge means 52, 53, 54, 55 of or with each of both swivel bodies 43, 44 of each suspension are substantially in a second direction also at least almost in alignment with each other. Furthermore, a supporting point S of the wheel is substantially in the first direction R1 at least almost in alignment with the hinge means 51, 52 of or with the wheel holders and substantially in the second direction R2 at least almost in alignment with the hinge means 53, 55 between the swivel bodies 43, 44 and the vehicle frame 20.

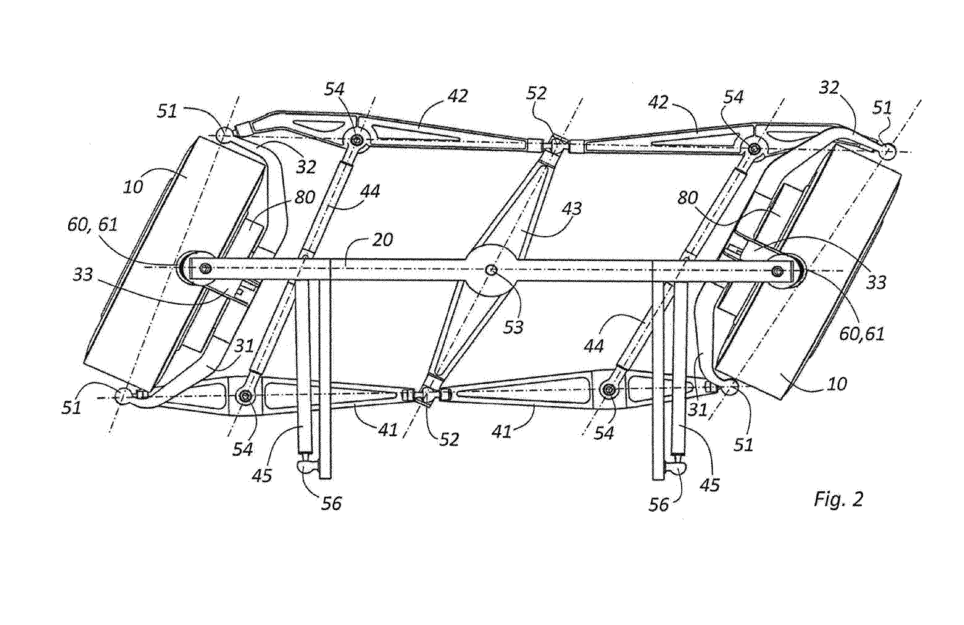

Consequently the hinge means lie at the vertices of imaginary parallelograms with in pairs mutually almost parallel sides, which are stretched or enclosed by one or more of the track bodies 41, 42 and the swivel bodies 43, 44 together with an imaginary line through the rotation points 51, 52 and the supporting point S of the wheel. In the top view of figure 2 the described structure of the assembly and the interplay between the individual parts of the suspension are represented more clearly. The first and second direction of the hinge means within the individual parts, such as the track bodies and swivel bodies, are indicated schematically with interrupted centre lines. Although these lines are not completely parallel to each other, due to a king pin inclination and Ackermann principle which are also pursued, nevertheless a first direction in a width of the vehicle and second direction in a driving direction of the vehicle can substantially be distinguished in them.

An important advantage of the wheel suspension according to the invention is that, although the wheel suspension mainly behaves like a normal king pin axis suspension with king pin axis connection on the inside of the wheel near the supporting point S, a substantial space is kept free in the shown wheel suspension on the inside of the wheel. This space can be used advantageously, for example for a wheel motor 80 such as represented in the figure. This example concerns an electric motor which drives the wheel 10 directly and is assembled inside the wheel to a large extent. The motor 80 receives power via connection cables not shown in further detail from a battery storage , which is placed elsewhere in the vehicle frame, also not shown in more detail. In addition, the motor 80 is connected to an electronic steering connection to receive control signals from it. In addition space is available on location to potentially place braking means directly at the wheel.

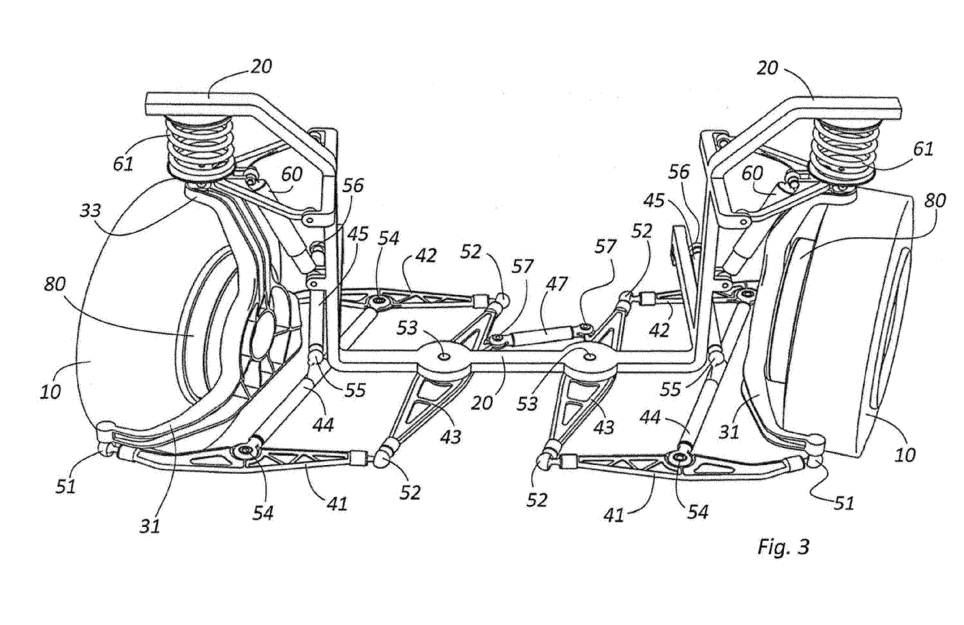

A third arm 33 of the wheel holder is connected to the vehicle frame 20 in an axially moveable manner through the interposition of suitable spring means. The spring means may consist of a shock absorber 60, usually with a helical spring 61 around or next to it (see also figure 3) or else are formed by air suspension with in that case bellows between the third wheel holder arm and the vehicle frame.

Instead of a common first swivel body 43, as in het previous example, the wheel suspension can also be equipped with a separate first swivel body. An example of such an embodiment is displayed in figure 3-5. In order to ensure a synchronous coupling between the deflections of both wheels both first swivel bodies are coupled to each other by a coupling body 47 which extends between them. The coupling body is rotatably connected to both swivel bodies through the interposition of further hinge means 57 in the form of ball hinges.

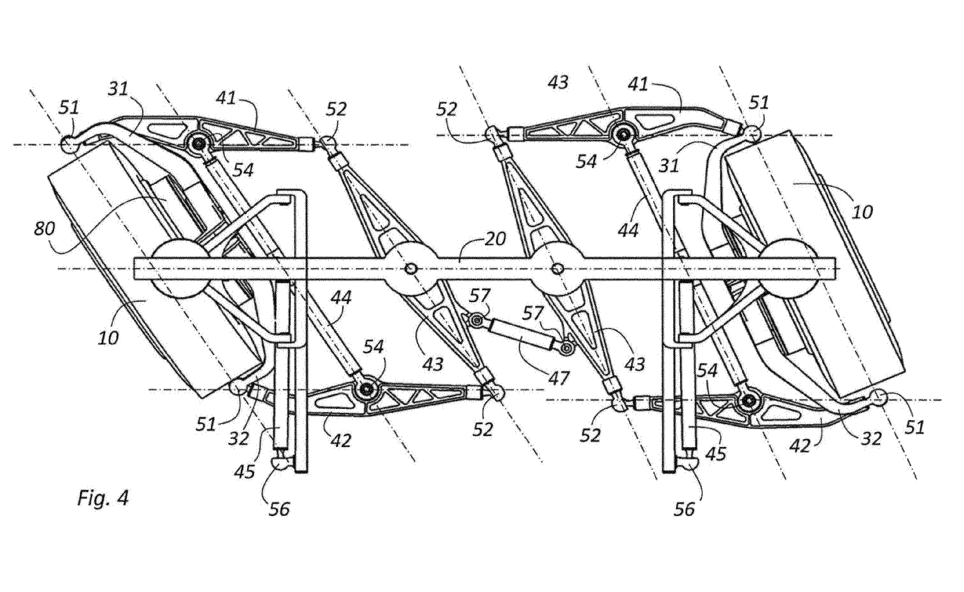

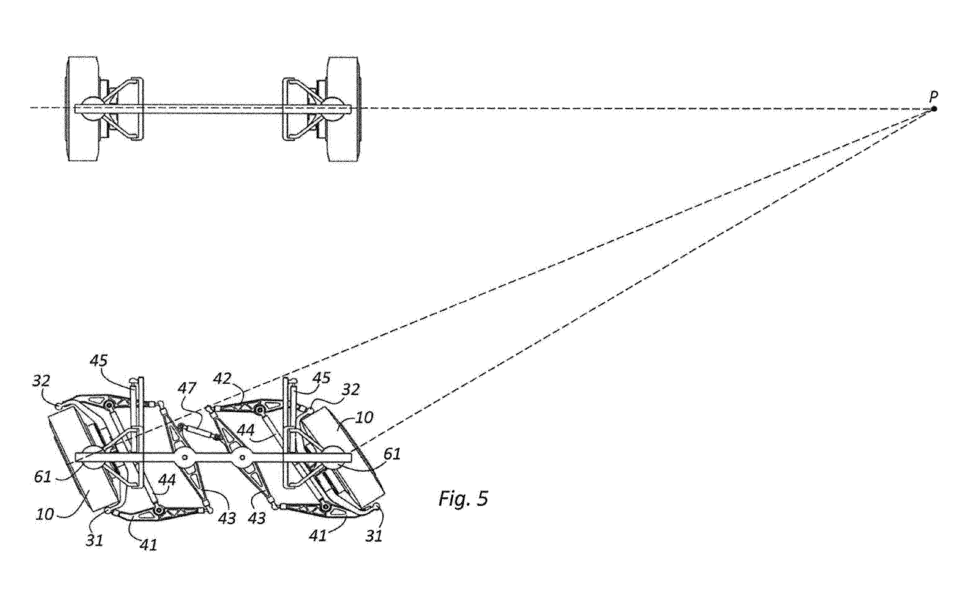

The ball hinges 57 are located outside the line which is stretched by the remaining hinge means 51, 52, 53 of or with the swivel bodies, see also figure 4. The effect of this is shown in figure 5 and results in the rotation axes of both wheels at least almost intersecting each other in a turn at the level of a point P on or in the prolongation of a further wheel axle of the vehicle, from which a set of non-steered wheels extends. Thus the wheel suspension complies with the so-called Ackermann-principle that aims to counteract a "wrenching" of the wheels in a turn. In the case of a simultaneously steered further wheel axle the coupling body 47 is sized and assembled in such a way that the aforementioned intersection P is positioned centrally under the vehicle about halfway between both wheel axles.

For the rest, the various hinge means with or of the track bodies, swivel bodies and wheel holder mutually are at least almost in alignment with each other in this embodiment, such as is schematically shown in the top view of figure 4 with centre lines. Also in this case again a first direction in a width of the vehicle can be substantially distinguished from a second direction mainly directed in a driving direction, whereby the hinge means of or with the swivel bodies and wheel holder are at least almost substantially in alignment with each other. The hinge means with the track bodies are substantially in the first direction almost mutually in alignment with each other.

Although the above invention was described in more detail using just two embodiment examples, it should be clear that the invention is certainly not limited to these. On the contrary, in the context of the invention many variations and embodiments are available to the average person skilled in the art.

## Claims

1. Wheel suspension for a steered wheel, the wheel suspension comprising a wheel holder with which a wheel, at least during operation, is rotatably connected around a rotation axis, the wheel holder being connectable in a swiveling manner to a vehicle frame, at least one track body being coupled to the wheel holder, which is capable of and adapted to impose a deflection around a swivel axis to the wheel holder, when energized, **characterized in that** the at least one track body comprises a first track body and a second track body, which, through the interposition of first hinge means are each rotatably connected to respectively a first swivel body, a second swivel body and the wheel holder, that the first swivel body and the second swivel body are rotatably connected to the vehicle frame through the interposition of respective further hinge means, that the first hinge means and the further hinge means are at least substantially in a first mutual direction, at least in projection, at least substantially in alignment with one another, that the hinge means of or with each of the two swivel bodies and of or with the wheel holder are at least substantially in a second direction, at least in projection, at least substantially in alignment with one another, that a supporting point of the wheel and the further hinge means are at least substantially in the first direction, at least in projection, at least substantially in alignment with one another and that the supporting point of the wheel and the hinge means of or with the wheel holder are at least substantially in the second direction, at least in projection, at least substantially in alignment with one another.

2. Wheel suspension according to claim 1 **characterized in that** the first hinge means comprise ball hinge means.

3. Wheel suspension according to any one of the preceding claims **characterized in that** the further hinge means comprise line hinge means.

4. Wheel suspension according to any one of the preceding claims **characterized in that** the first hinge means with the first swivel body comprise ball hinge means, that the further hinge means of the first swivel body comprise a line hinge with a substantially vertical swivel axle, and that the second swivel body is connected to the vehicle frame by guide means which impose upon the further hinge means of the second swivel body a trajectory at least almost in accordance with a circular arc.

5. Wheel suspension according to claim 4 **characterized in that** the guide means comprise a stabilization body which is connected to the second swivel body through the interposition of first ball hinge means and is connectable to the vehicle frame through the interposition of second ball hinge means, the first and second ball hinge means, being, at least in projection, in alignment with each other, when viewed in a driving direction.

6. Wheel suspension according to any one of the preceding claims **characterized in that** the wheel holder comprises a first wheel holder part on a first side of a wheel space, as well as a second wheel holder part on a second facing side of the wheel space, when viewed in a driving direction, and that the first and the second track body are rotatably connected on both sides of the wheel space through the interposition of ball hinge means to respectively the first wheel holder part and the second wheel holder part of the wheel holder.

7. Wheel suspension according to claim 6 **characterized in that** the wheel holder comprises a central part with which the wheel is rotatably connectable around a rotation axis, that the first wheel holder part and the second wheel holder part each comprise an angulated wheel holder arm which on the one hand extends radially from the central part of the wheel holder and on the other hand reaches around the wheel space with a distal end, where a track body is connected to it.

8. Wheel suspension according to claim 6 or 7 **characterized in that** the wheel holder comprises a third wheel holder part between the first wheel holder part and the second wheel holder part, which extends above the wheel space and is connectable to the vehicle frame through the interposition of ball hinge means and guide means, the ball hinge means being located at least almost in a vertical plane through the supporting point of the wheel, and that the guide means impose upon the wheel holder at least substantially a linear trajectory.

9. Wheel suspension according to any one of the preceding claims **characterized in that** the wheel holder is connectable in an axially movable manner to the vehicle frame through the interposition of spring means.

10. Wheel suspension according to any one of the preceding claims **characterized in that** the wheel holder comprises a wheel motor, in particular an electric motor, which, at least during operation, drives the wheel and is at least partly located within the wheel.

11. Wheel suspension according to any one of the preceding claims comprising a second, corresponding wheel holder which is connectable to the vehicle frame in a swivelable manner on a facing side of the vehicle frame.

12. Wheel suspension according to claim 11 **characterized in that** both wheel holders are coupled to a common swivel body.

13. Wheel suspension according to claim 11 **characterized in that** both wheel holders are each connected to an own swivel body and that the swivel bodies of both wheel holders are coupled to each other by means of a coupling body, the coupling body being rotatably connected outside the line of the first hinge means of or with the swivel body to each of the swivel bodies.

14. Wheel suspension according to claim 11, 12 or 13 **characterized in that** the swivel bodies extend with a steered wheel from a wheel axle of the vehicle and that the vehicle comprises a further wheel axle from which a set of non-steered wheels extends and that the respective rotation axes of the steered wheels, when inclined, intersect each other at least almost in the prolongation of the further wheel axle of the vehicle.

15. Wheel suspension according to claim 11, 12 or 13 **characterized in that** the swivel bodies extend with a steered wheel from a wheel axle of the vehicle and that the vehicle comprises a further wheel axle from which a corresponding further set of steered wheels extends and that respective rotation axes of the steered wheels, when inclined, intersect each other at least almost on an imaginary axis half way between both wheel axles of the vehicle.
